(19) Europäisches Patentamt
European Patent Office
Office européen des brevets

(11) **EP 1 233 165 B1**

(12) **EUROPÄISCHE PATENTSCHRIFT**

(45) Veröffentlichungstag und Bekanntmachung des Hinweises auf die Patenterteilung:
**01.02.2012   Patentblatt 2012/05**

(51) Int Cl.:
*G05B 23/02* (2006.01)        *G01D 3/08* (2006.01)
*F02C 9/00* (2006.01)

(21) Anmeldenummer: **01810172.5**

(22) Anmeldetag: **19.02.2001**

(54) **Bestimmung einer Degradation einer Gasturbine**

Determination of gas turbine degradation

Etablissement de détérioration d'une turbine à gaz

(84) Benannte Vertragsstaaten:
**AT BE CH CY DE DK ES FI FR GB GR IE IT LI LU MC NL PT SE TR**

(43) Veröffentlichungstag der Anmeldung:
**21.08.2002   Patentblatt 2002/34**

(73) Patentinhaber: **ABB Schweiz AG**
**5400 Baden (CH)**

(72) Erfinder:
• **Antoine, Marc**
 **5014 Gretzenbach (CH)**
• **Escher, Patrick**
 **5400 Baden (CH)**

(74) Vertreter: **ABB Patent Attorneys**
**C/o ABB Schweiz AG**
**Intellectual Property (CH-LC/IP)**
**Brown Boveri Strasse 6**
**5400 Baden (CH)**

(56) Entgegenhaltungen:
WO-A-99/64736

• PATTON R J ET AL: "ROBUST FAULT DETECTION OF JET ENGINE SENSOR SYSTEMS USING EIGENSTRUCTURE ASSIGNMENT" JOURNAL OF GUIDANCE AND CONTROL AND DYNAMICS,US,AIAA. NEW YORK, Bd. 15, Nr. 6, 1. November 1992 (1992-11-01), Seiten 1491-1497, XP000335320 ISSN: 0731-5090

**Beschreibung**

**Technisches Gebiet**

Die Erfindung bezieht sich auf das Gebiet der Leit- und Messtechnik für Gasturbinen. Sie bezieht sich auf ein Verfahren und ein Computerprogrammprodukt zur Bestimmung einer Degradation einer Gasturbine gemäss dem Oberbegriff der Patentansprüche 1 und 9.

**Stand der Technik**

Ein derartiges Verfahren zur Bestimmung einer Degradation einer Gasturbine ist beispielsweise aus "An Object-Oriented Diagnostic Computer Program Suitable for Industrial Gas Turbines", P. C. Escher et al, CIMAC Conference, Interlaken, Schweiz, 15-18 May, 1995, bekannt. In diesem Verfahren wird ein Degradationszustand einer Gasturbine anhand von Messungen im Betrieb der Gasturbine ermittelt. Das Verfahren, GPA ("Gas Path Analysis") genannt, verwendet eine mathematische Nachbildung respektive ein Modell eines thermo- und aerodynamischen Betriebsverhaltens der Gasturbine. Das Modell erlaubt, aus Eingangsgrössen wie z.B. Lufteintrittstemperatur und - Druck, sowie aus Annahmen über Zustandsparameter, Werte von messbaren Ausgangsgrössen zu ermitteln. Solche Ausgangsgrössen sind beispielsweise Drücke, Massenströme und Temperaturen an verschiedenen Stellen im Gaspfad der Gasturbine, ein Brennstoffmassenstrom, eine Drehzahl, eine abgegebene mechanische Leistung. Einzelne Zustandsparameter repräsentieren einen Degradationszustand je einer Komponente der Gasturbine, beispielsweise eine Verschmutzung von Verdichterschaufeln und Verminderung einer Schluckfähigkeit des Verdichters, Erosion von Turbinenschaufeln oder Korrosion von Maschinenteilen.

Um eine Wartung der Gasturbine planen zu können, ist es von Interesse, bereits während des Betriebs der Gasturbine zu wissen, in welchem Zustand sich die einzelnen Komponenten befinden. Da die Zustandsparameter nicht messbar sind, wird anhand von Messwerten der messbaren Ausgangsgrössen und anhand des Modells auf die Zustandsparameter geschlossen.

Dabei stellt sich das Problem, dass Sensoren defekt sein und falsche Messwerte liefern können. Dadurch werden auch die geschätzten Zustandsparameter verfälscht, und es ist nichtohne weiteres ersichtlich, ob eine Veränderung von Messwerten auf eine Änderung des Zustands oder eine Verfälschung der Messwerte durch einen fehlerhaften Sensor zurückzuführen ist. Die existierenden Verfahren (z.B. Methode der kleinsten Quadrate) haben den Nachteil, dass entweder redundante Sensoren eingesetzt werden müssen oder dass die Möglichkeit einen Sensodefekt zu erkennen durch die Unkenntnis des beobachteten Prozesses beschränkt ist, was einen grossen Engineeringaufwand bedingt.

Gemäss der Patentanmeldung WO 99/64736 wird ein Residuenvektor eines i-ten Beobachters, welcher mit allen Sensoren einer Maschine bis auf einen verbunden ist, definiert als Differenz zwischen realen gemessenen Werten und Schätzungen. Er wird ausgewertet, indem eine gewichtete Summe von quadratischen Residuen gebildet und mit anderen Summen verglichen wird.

**Darstellung der Erfindung**

Es ist deshalb Aufgabe der Erfindung, ein Verfahren und ein Computerprogrammprodukt zur Bestimmung einer Degradation einer Gasturbine der eingangs genannten Art zu schaffen, welche eine einfache Bestimmung von fehlerhaften Messwerten respektive Sensoren erlauben.

Diese Aufgabe lösen ein Verfahren und ein Computerprogrammprodukt zur Bestimmung einer Degradation einer Gasturbine mit den Merkmalen der Patentansprüche 1 und 9.

Erfindungsgemäss wird also ein Degradationszustand der Gasturbine anhand eines Satzes von Messwerten mehrmals geschätzt, wobei bei jeder Schätzung jeweils mindestens einer der Messwerte nicht berücksichtigt wird. Eine abweichende Schätzung, welche wesentlich von den übrigen Schätzungen oder von einer Schätzung, welche alle Messwerte berücksichtigt, abweicht, impliziert dass ein Messwert, der für diese abweichende Schätzung nicht berücksichtigt wurde, fehlerhaft ist.

Dadurch wird es möglich, in einfacher Weise zwischen Zustandsänderungen und Messfehlern zu unterscheiden. Bei einem ohnehin implementierten GPA-Verfahren zur Ermittlung einer Degradation einer Gasturbine ist die erfindungsgemässe Bestimmung defekter Sensoren mit geringem Programmieraufwand und ohne Annahmen über ein Verhalten einzelner Sensoren möglich.

Ein weiterer Vorteil ist, dass das Verfahren eine grosse Menge von Informationen, d.h. Daten mehrerer Sensoren sowie Informationen über ein Verhalten der Gasturbine, verwendet. Dies erhöht die Qualität des Verfahrens im Gegensatz zu Verfahren, welche einen Sensor isoliert beurteilen, also nur anhand seiner eigenen Messwerte.

Weitere bevorzugte Ausführungsformen gehen aus den abhängigen Patentansprüchen hervor.

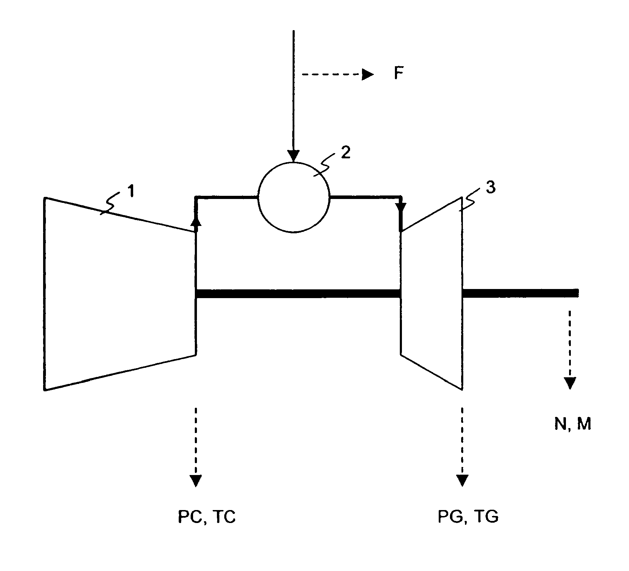

## Kurze Beschreibung der Zeichnung

Im folgenden wird der Erfindungsgegenstand anhand eines bevorzugten Ausführungsbeispiels, welches in der beiliegenden Zeichnung dargestellt ist, näher erläutert. Die einzige Figur zeigt schematisch einen Aufbau einer Gasturbine mit zugehörigen Messgrössen. Die in der Zeichnung verwendeten Bezugszeichen und deren Bedeutung sind in der Bezugszeichenliste zusammengefasst aufgelistet.

## Wege zur Ausführung der Erfindung

Die Figur zeigt schematisch einen Aufbau einer Gasturbine mit dazugehörenden Messgrössen. Ein Verdichter 1 oder Kompressor verdichtet Luft, welche in einer Brennkammer 2 mit Brennstoff gemischt wird. Das Gemisch wird verbrannt und dadurch eine Turbine 3 angetrieben. Turbine 3 und Verdichter 1 weisen eine gemeinsame Rotorwelle auf. Am Verdichter werden ein Austrittsdruck PC und eine Austrittstemperatur TC gemessen, an der Turbine 3 wird ebenfalls ein Austrittsdruck PG und eine Austrittstemperatur TG gemessen. Weitere Messgrössen sind eine Drehzahl N der Rotorwelle, ein durch die Rotorwelle nutzbares mechanisches Drehmoment oder eine übertragene Wellenleistung M, und ein Brennstoffmassenstrom F.

In einer bevorzugten Ausführungsform der Erfindung werden weitere Grössen gemessen. Insbesondere werden bei einer zweistufigen Gasturbine mindestens ein Austrittsdruck und eine Austrittstemperatur einer weiteren Turbine, welche der Turbine 3 und einer weiteren Brennkammer nachgeschaltet ist, gemessen.

Zu einem bestimmten Messzeitpunkt werden Messwerte erfasst, das heisst, die oben genannten Messgrössen werden mittels mehrerer geeigneter Sensoren erfasst und gegebenenfalls aufbereitet, beispielsweise durch Filterung einer zeitlichen Folge von Sensorwerten oder durch Mittelung von Sensorwerten mehrerer redundanter Sensoren. Dadurch wird jedem Sensor für den Messzeitpunkt ein Messwert zugeordnet und einer Datenverarbeitungseinheit übermittelt. Die Messwerte für einen bestimmten Messzeitpunkt bilden einen Satz oder Vektor $y = (y_1, y_2, ... y_n)$ von Messwerten, wobei n die Anzahl der Messwerte ist.

Entsprechend der eingangs erwähnten Methode der Gaspfadanalyse (GPA) liegt ein mathematisches Simulationsmodell des thermo- und aerodynamischen Betriebsverhaltens der Gasturbine vor. Das Modell wird vorzugsweise aufgrund einer physikalischen Modellierung der Gasturbine strukturiert, vorzugsweise aufgrund von Massen- und Energiebilanzen, und aufgrund von Messungen an eine bestimmte konkrete Gasturbine angepasst. Für die Zwecke der vorliegenden Erfindung ist es ausreichend, das Modell als Funktion $y=f(x)$ zu betrachten, welche einem Zustandsvektor x eindeutig einen Satz von Messwerten y zuordnet. Der Zustandsvektor $x = (x_1, x_2, ... x_m)$ enthält m Zustandsparameter, welche je einen Degradationszustand einer Komponente der Gasturbine repräsentieren. Im allgemeinen ist die Funktion nichtlinear und ist $m<n$. Die berechneten Messwerte sind zum Teil auch von gemessenen Eingangsgrössen der Gasturbine wie z.B. Lufteintrittstemperatur und -Druck abhängig. Diese Eingangsgrössen werden im Zusammenhang mit der vorliegenden Erfindung als Parameter des Modells betrachtet.

Im Betrieb der Gasturbine wird beispielsweise die Drehzahl N oder eine abgegebene mechanische Leistung der Gasturbine geregelt. Durch diese Regelung stellt sich ein Betriebszustand ein. Beispielsweise ergeben sich für eine neuwertige Gasturbine bei einer vorgegebenen nominalen Leistung und Drehzahl zugeordnete nominale Werte für den Brennstoffmassenstrom F und die Drücke und Temperaturen an verschiedenen Messstellen der Gasturbine. Diesen Werten entspricht ein nominaler Zustand der Gasturbine, der beispielsweise durch einen Verdichterwirkungsgrad, einen Turbinenwirkungsgrad, einen Verdichtermassenstrom und einen Turbinenmassenstrom repräsentiert wird.

Wird die Gasturbine im Lauf der Zeit durch Verschmutzung, Erosion und Korrosion degradiert, so werden zum Beispiel die Drehzahl und Leistung durch die Regelung auf zugeordneten Sollwerten gehalten. Wegen verschlechterter Wirkungsgrade steigt dabei aber z.B. der Brennstoffmassenstrom und sinken Drücke am Austritt des Verdichters. Entsprechend verändern sich die übrigen Messwerte. Diese Änderungen sind eine Auswirkung des verschlechterten Zustands x der Gasturbine, der mittels der GPA ermittelt wird. Falls z.B. die Drehzahl geregelt wird, liefert sie keine Information und ist im erfindungsgemässen Verfahren nicht verwendbar

Anhand des Modells wird aus gemessenen Messwerten y der Degradationszustand x der Gasturbine respektive ihrer Komponenten berechnet. Es wird also ein Zustand x gesucht, der einem gegebenen Satz von Messwerten $y=f(x)$ möglichst gut entspricht. Da im allgemeinen $m<n$ ist, ist der Zustand x überbestimmt und es ist eine Ausgleichsrechnung notwendig, um gegebenenfalls Inkonsistenzen zwischen den Messwerten y auszugleichen. Die Funktion f ist im allgemeinen nicht geschlossen umkehrbar, so dass der Zustand x vorzugsweise mit einem numerischen Verfahren iterativ bestimmt wird, beispielsweise mit einer mehrdimensionalen Variante des Newton-Raphson Verfahrens.

In einer linearen Variante des GPA-Verfahrens wird die Funktion f im Nominalbetriebspunkt linearisiert, das heisst, es wird für einen nominalen Zustand $x_0$ mit zugeordneten nominalen Messwerten $y_0=f(x_0)$ eine Jacobi-Matrix J bestimmt, so dass für eine kleine Abweichung dx des Zustands x vom Nominalzustand $x_0$ und eine entsprechende Abweichung dy der Messwerte y von den nominalen Messwerten $y_0$ gilt

$$dy = J \, dx.$$

Um in diesem Fall bei gegebenen Messwerten y den dazugehörigen Zustand x zu bestimmen, wird eine Inverse $J^{-1}$ der Jacobi-Matrix J bestimmt. Da im allgemeinen m<n gilt, d.h. mehr Messwerte als Zustände vorliegen, wird die Inverse $J^{-1}$ als verallgemeinerte Inverse oder Pseudo-Inverse gebildet. Somit ist

$$x = x_0 + J^{-1} (y - y_0).$$

In einer nichtlinearen Variante des GPA-Verfahrens, welche bei grösseren Abweichungen vom Nominalbetriebspunkt genauere Werte liefert, wird, ausgehend vom Nominalbetriebspunkt, mit einem numerischen Verfahren iterativ diejenige Zustandsabweichung dx ermittelt, welche einer vorliegenden Messwertabweichung dy entspricht. Dabei wird vorzugsweise in jedem Iterationsschritt von einem geschätzten Zustand ausgegangen und eine Jacobi-Matrix sowie die entsprechenden Messwerte in diesem Zustand anhand der Funktion f berechnet. Eine Abweichung dieser berechneten Messwerte von den gemessenen Messwerten wird mit der inversen Jacobi-Matrix multipliziert und der geschätzte Zustand entsprechend diesem Produkt korrigiert. Der korrigierte Zustand dient als geschätzter Zustand für einen nächsten Iterationsschritt.

Falls nun fehlerhafte Messwerte vorliegen, beispielsweise aufgrund eines defekten oder driftenden Sensors oder einer gestörten Datenverarbeitung oder -übermittlung, so führen diese durch die erwähnte Ausgleichsrechnung zu einer Veränderung eines mittels GPA geschätzten Zustands x respektive einer geschätzen Zustandsabweichung dx vom Nominalzustand x0. Diese Veränderung gilt es von einer tatsächlichen Änderung des Degradationszustands der Gasturbine zu unterscheiden.

Zu dieser Bestimmung eines fehlerhaften Messwertes werden gemäss der Erfindung mehrere Untermengen respektive reduzierte Messwertvektoren yr(k) des Satzes von Messwerten gebildet. Dabei bezeichnet mindestens ein Index k einer Untermenge diejenigen Messwerte, die nicht in der Untermenge enthalten sind. Beispielsweise sind bei einem Satz respektive Vektor von Messwerten y = (PC,TC,PG,TG,F,M) die möglichen Untermengen, bei denen zyklisch jeweils genau ein Messwert weggelassen ist,

$$yr(PC) = (TC,PG,TG,F,M),$$

$$yr(TC) = (PC,PG,TG,F,M),$$

$$yr(PG) = (PC,TC,TG,F,M),$$

$$yr(TG) = (PC,TC,PG,F,M),$$

$$yr(F) = (PC,TC,PG,TG,M),$$

$$yr(N) = (PC,TC,PG,TG,F).$$

Analog dazu sind Untermengen, bei denen genau zwei Messwerte weggelassen sind

$$yr(PC,TC) = (PG,TG,F,M),$$

$$yr(PC,PG) = (TC,TG,F,M),$$

$$yr(PC,TG) = (TC,PG,F,M),$$

...etc.

Da die Zustandswerte bei gegebenen Messwerten überbestimmt sind, ist ein Zustandsvektor auch anhand von reduzierten Messwertvektoren yr(k) berechenbar. Wieviele und welche Messwerte in einem gegebenen Fall noch zur eindeutigen Bestimmung des Zustands ausreichen, hängt von der Struktur der Modellgleichungen ab. Zum Beispiel werden TC, PC, TG, PG und M gemessen. Daraus lassen sich, falls sowohl eine Verschmutzung des Verdichters als auch eine Erosion der Turbine vorliegt, vier Zustandswerte ermitteln, nämlich jeweils der Massenstrom und der Wirkungsgrad des Verdichters und der Turbine. Falls zyklisch jeweils genau eine der Messungen ignoriert wird, können aus den entsprechenden reduzierten Messwertvektoren je nach Modellierung verschiedene Zustandswerte zuverlässig berechnet werden.

Entsprechend dem linearen GPA-Verfahren soll bei einem gegebenen reduzierten Messwertvektor yr(k) oder einem entsprechenden reduzierten Vektor dyr(k) von Abweichungen der Messwerte der dazugehörige Zustand x bestimmt werden. Dazu wird eine reduzierte Inverse $Jr(k)^{-1}$ einer reduzierten jacobi-Matrix Jr(k) bestimmt. Die reduzierte Jacobi-Matrix Jr(k) entsteht durch Streichen mindestens einer der Zeilen der Jacobi-Matrix J, welche dem mindestens einen nicht berücksichtigten Messwert mit Index k entspricht respektive entsprechen, so dass also

$$dyr(k) = Jr(k)\, dx.$$

Solange m=<n ist, und der Rang von Jr(k) mindestens m beträgt, existiert die reduzierte Inverse $Jr(k)^{-1}$ als verallgemeinerte Inverse oder Pseudo-Inverse und es ist

$$dx(k) = Jr(k)^{-1}\, dyr(k),$$

respektive

$$x(k) = x0 + Jr(k)^{-1}\, (\, yr(k) - y0r(k)\, ).$$

Dabei sind x(k) respektive dx(k) der geschätzte Zustand respektive die geschätzte Abweichung des Zustands vom Nominalzustand, welche die Messung k nicht berücksichtigen. Dabei ist zu beachten, dass x(k) respektive dx(k) die gleiche Anzahl Elemente aufweisen wie x und dx.

In analoger Weise wird das oben beschriebenen nichtlineare GPA-Verfahren unter Verwendung von reduzierten Messwertvektoren und Jacobi-Matrizen angewandt.

Um fehlerhafte Messwerte respektive Sensoren zu bestimmen, wird für jede der Untermengen ein Zustandsvektor berechnet und dieser Untermenge zugeordnet. Jedem Messwert werden diejenigen Untermengen zugeordnet, welche den Messwert nicht enthalten. Entsprechend dem obigen Beispiel sind dem Messwert PC die Mengen yr(PC) = (TC,PG,TG,F,N) und yr(PC,TC) = (PG,TG,F,N), und eventuell weitere Mengen zugeordnet. Die Zustandsvektoren, welche den Untermengen zugeordnet sind, welche einem Messwert zugeordnet sind, werden auch diesem Messwert zugeordnet.

Somit ist jedem Messwert mindestens ein Zustandsvektor zugeordnet. Für den Fall dass mehrere Untermengen existieren, welche den Messwert des Sensors nicht enthalten, sind mehrere Zustandsvektoren dem Messwert zugeordnet.

Ein Messwert, dessen zugeordneter Zustandsvektor oder zugeordnete Zustandsvektoren im wesentlichen von den zugeordneten Zustandsvektoren der anderen Messwerte abweicht, wird als fehlerhaft diagnostiziert. Beispielsweise wird ein Messwert, dessen Zustandsvektor oder zugeordnete Zustandsvektoren im wesentlichen von einem Zustandsvektor abweicht, welcher alle Messwerte berücksichtigt, als fehlerhaft diagnostiziert. In beiden Fällen wird davon ausgegangen, dass, falls eine Messung fehlerhaft ist, der mindestens eine zugeordnete Zustandsvektor, welcher ja gerade diese Messung nicht berücksichtigt, den tatsächlichen Zustand der Maschine am besten beschreibt. Alle anderen geschätzten Zustandsvektoren enthalten die fehlerhafte Messung und weichen somit vom tatsächlichen Zustand ab. Der mindestens eine dem Messwert zugeordnete Zustandsvektor weicht also im wesentlichen von denjenigen Zustandsvektoren ab, welche diesen Messwert berücksichtigen.

Erfindungsgemäss wird diese Abweichung bestimmt, indem die Abweichung der Zustandsvektoren vom Nominalzustand $x_0$ betrachtet wird. Dabei ist dx die geschätzte Abweichung des Zustandsvektors vom Nominalzustand, welche alle Messungen berücksichtigt, und ist dx(k) die geschätzte Abweichung des Zustands vom Nominalzustand, welche die Messung k nicht berücksichtigen. Es sind $dx_i$ respektive $dx_i(k)$ je das i-te Element des entsprechenden Vektors. Falls Messungen stets nur einzeln ignoriert werden, ist jeder Messung genau ein Vektor dx(k) zugeordnet. Dann ist ein Mass $Q_k$ für die Qualität dieser Messung

$$Q_k = \frac{1}{m} \sum_{i=1}^{m} \frac{abs(dx_i - dx_i(k))}{dx_i(k)} \ .$$

Eine Messung wird als fehlerhaft diagnostiziert, wenn ihr Qualitätsmass grösser als mindestens annähernd 30% wird.
In einer anderen Variante der Erfindung beträgt ein weiteres Qualitätsmass

$$Q_k = \frac{1}{m-1} \sum_{i=1}^{m-1} \frac{abs\lfloor arctan(dx_{i+1} - dx_i) - arctan(dx_{i+1}(k) - dx_i(k)) \rfloor}{\pi} \ ,$$

wobei die arctan-Funktion in Radian berechnet wird. Eine Messung wird vorzugsweise als fehlerhaft diagnostiziert, wenn dieses weitere Qualitätsmass grösser als mindestens annähernd 5%, 10% oder 30% wird.
In einer bevorzugten Variante des erfinderischen Verfahrens werden fehlerhafte Messwerte respektive defekte Sensoren einem Benutzer mittels einer Bedienoberfläche eines Leitsystems der Gasturbine angezeigt, und/oder werden fehlerhafte Messwerte im Leitsystem als fehlerhaft markiert und nicht berücksichtigt.
Ein Computerprogrammprodukt gemäss der Erfindung umfasst Computerprogrammcodemittel, welche vorzugsweise auf einem computerlesbaren Medium gespeichert sind, und welche geeignet sind, bei Ausführung auf einem Computer das Verfahren gemäss der Erfindung auszuführen.
Die Erfindung ist mit einer im Wesentlichen beliebigen Anzahl von Sensoren respektive Messwerten ausführbar, sofern diese Messwerte in der GPA berücksichtigbar sind. Eine zu Testzwecken durchgeführte Modellierung und GPA weist annähernd je 30 Messwerte und Zustandswerte auf.

**Bezugszeichenliste**

| | |
|---|---|
| 1 | Verdichter |
| 2 | Brennkammer |
| 3 | Turbine |
| PC | Verdichteraustrittsdruck |
| TC | Verdichteraustrittstemperatur |
| PG | Turbinenaustrittsdruck |
| TG | Turbinenaustrittstemperatur |
| F | Brennstoffmassenstrom |
| N | Drehzahl |
| M | Mechanische Leistung oder Drehmoment |

**Patentansprüche**

1. Verfahren zur Bestimmung einer Degradation einer Gasturbine, in welchem zu einem Messzeitpunkt ein Satz von Messwerten y erfasst wird und aus diesem Satz von Messwerten ein Zustandsvektor x berechnet wird, der die Degradation der Gasturbine charakterisiert, wobei,

   a) zur Bestimmung eines fehlerhaften Messwertes mehrere Untermengen des Satzes von Messwerten y gebildet werden,
   wobei für jede der Untermengen der Zustandsvektor x aus den Messwerten der Untermenge berechenbar ist,

b) und jedem Messwert eine Untermenge von Messwerten zugeordnet wird, welche diesen Messwert nicht enthält,

c) und für jede Untermenge von Messwerten anhand der Messwerte dieser Untermenge ein Zustandsvektor berechnet und demjenigen Messwert zugeordnet wird, welcher der Untermenge zugeordnet ist, **dadurch gekennzeichnet**,

d1) dass ein Mass $Q_k$ für die Qualität eines k-ten Messwertes im wesentlichen gemäss

$$Q_k = \frac{1}{m} \sum_{i=1}^{m} \frac{abs\left(dx_i - dx_i(k)\right)}{dx_i(k)}$$

bestimmt wird, wobei m eine Anzahl von Zuständen respektive von Elementen eines Vektors $dx = (dx_1, dx_2, \ldots dx_m)$ von Abweichungen eines geschätzten Zustandes x von einem Nominalzustand $x_0$ ist, der Vektor dx unter Berücksichtigung des k-ten Messwertes bestimmt wird, und der Vektor dx(k) ohne Berücksichtigung des k-ten Messwertes bestimmt wird, und

d2) dass ein Messwert, dessen Qualitätsmass $Q_k$ grösser als ein Mindestwert ist, als fehlerhaft diagnostiziert wird.

2. Verfahren gemäss Anspruch 1, **dadurch gekennzeichnet, dass** in einem Nennzustand der Gasturbine aus nominalen Messwerten $y_0$ der nominale Zustandsvektor $x_0$ resultiert, und für jede Untermenge von Messwerten der Zustandsvektor x berechnet wird, indem Abweichungen dy der Messwerte y von den nominalen Messwerten $y_0$ bestimmt werden, und aus diesen Abweichungen der Messwerte eine Abweichung dx des Zustandsvektors x vom Nominalzustand $x_0$ bestimmt wird.

3. Verfahren gemäss Anspruch 2, **dadurch gekennzeichnet, dass** eine Funktion y=f(x) zur Berechnung der Messwerte y aus dem Zustandsvektor x vorliegt, diese Funktion im Nominalzustand $x_0$ linearisiert und eine Jacobi-Matrix J gebildet wird, und die Bestimmung der Abweichung dx des Zustandsvektors x durch Multiplikation einer Inversen $J^{-1}$ der Jacobi-Matrix J mit den Abweichungen dy der Messwerte y durchgeführt wird.

4. Verfahren gemäss Anspruch 1 , **dadurch gekennzeichnet, dass** eine Funktion y=f(x) zur Berechnung der Messwerte y aus dem Zustandsvektor x vorliegt und die Bestimmung des Zustandsvektors x aus den Messwerten y iterativ mit einem numerischen Verfahren anhand der Funktion y=f(x) durchgeführt wird.

5. Verfahren gemäss Anspruch 2, **dadurch gekennzeichnet, dass** eine Funktion y=f(x) zur Berechnung der Messwerte y aus dem Zustandsvektor x vorliegt und die Bestimmung der Abweichung dx des Zustandsvektors x aus den Abweichungen dy der Messwerte y iterativ mit einem numerischen Verfahren anhand der Funktion y=f(x) durchgeführt wird.

6. Verfahren gemäss Anspruch 1, **dadurch gekennzeichnet, dass** ein Messwert, dessen, Qualitätsmass $Q_k$ grösser als mindestens annähernd 30% wird, als fehlerhaft diagnostiziert wird.

7. Verfahren gemäss Anspruch 1, **dadurch gekennzeichnet, dass** der Satz von Messwerten Messwerte eines Austrittsdrucks (PC) und einer Austrittstemperatur (TC) eines Verdichters, eines Austrittsdrucks (PG) und einer Austrittstemperatur (TG) einer Turbine sowie mindestens einen Messwert von einer mechanischen Leistung, einem mechanischen Moment oder einem Brennstoffmassenstrom der Gasturbine aufweist.

8. Verfahren gemäss Anspruch 1, **dadurch gekennzeichnet, dass** die Untermengen der Messwerte aus dem Satz von Messwerten y gebildet werden, indem zyklisch genau ein Messwert weggelassen wird.

9. Computerprogrammprodukt mit Computerprogrammcodemitteln, welche geeignet sind, bei Ausführung auf einem Computer das Verfahren gemäss einem der Ansprüche 1 bis 8 auszuführen.

**Claims**

1. Method for determining a degradation of a gas turbine, in which a set of measured values y is detected at a measuring instant and a state vector x characterizing the degradation of the gas turbine is calculated from this set of measured values, wherein

a) a plurality of subsets of the set of measured values y are formed in order to determine a defective measured value, it being possible to calculate the state vector x for each of the subsets from the measured values of the subset,

b) and each measured value is assigned a subset of measured values which does not include this measured value,

c) and a state vector is calculated for each subset of measured values with the aid of the measured values of this subset and is assigned to that measured value which is assigned to the subset,

**characterized in that**

d1) a measure $Q_k$ of the quality of a kth measured value is essentially determined in accordance with

$$Q_k = \frac{1}{m} \sum_{i=1}^{m} \frac{abs(dx_i - dx_i(k))}{dx_i(k)}$$

m being a number of states or of elements of a vector $dx = (dx_{12}, dx_2, ... dx_m)$ of deviations of an estimated state x from a nominal state $x_0$, the vector dx being determined taking account of the kth measured value, and the vector dx(k) being determined without taking account of the kth measured value, and

d2) **in that** measured value whose measure of quality $Q_k$ is greater than a minimum value is diagnosed as defective.

2. Method according to Claim 1, **characterized in that** in a nominal state of the gas turbine the nominal state vector $x_0$ results from nominal measured values $y_0$, and the state vector x is calculated for each subset of measured values by determining deviations dy of the measured values y from the nominal measured values $y_0$, and a deviation dx of the state vector x from the nominal state $x_0$ is determined from these deviations of the measured values.

3. Method according to Claim 2, **characterized in that** a function y=f(x) is present for calculating the measured values y from the state vector x, this function is linearized in the nominal state $x_0$ and a Jacobi matrix J is formed, and the determination of the deviation dx of the state vector x is carried out by multiplying an inverse $J^{-1}$ of the Jacobi matrix J by the deviations dy of the measured values y.

4. Method according to Claim 1, **characterized in that** a function y=f(x) is present for determining the measured values y from the state vector x, and the determination of the state vector x from the measured values y is carried out iteratively using a numerical method with the aid of the function y=f (x) .

5. Method according to Claim 2, **characterized in that** a function y=f(x) is present for calculating the measured values y from the state vector x, and the determination of the deviation dx of the state vector x from the deviations dy of the measured values y is carried out iteratively using a numerical method with the aid of the function y=f (x) .

6. Method according to Claim 1, **characterized in that** a measured value whose measure of quality $Q_k$ is greater than at least approximately 30% is diagnosed as defective.

7. Method according to Claim 1, **characterized in that** the set of measured values has measured values of an outlet pressure (PC) and an outlet temperature (TC) of a compressor, an exhaust pressure (PG) and an exhaust temperature (TG) of a turbine and at least one measured value of a mechanical power, a mechanical torque or a fuel mass flow of the gas turbine.

8. Method according to Claim 1, **characterized in that** the subsets of the measured values are formed from the set of measured values y by cyclically omitting exactly one measured value.

9. Computer program product with computer program coding means which, in the case of execution on a computer, are suitable for executing the method according to one of Claims 1 to 8.

**Revendications**

1. Procédé pour la détermination d'une dégradation d'une turbine à gaz, dans lequel on enregistre un ensemble de valeurs de mesures y à un instant de mesure donné et à partir de cet ensemble de valeurs de mesures, on calcule un vecteur d'état x caractérisant la dégradation de la turbine à gaz, dans lequel

   a) on forme plusieurs sous-ensembles de l'ensemble de valeurs de mesures y pour la détermination d'une valeur de mesure défectueuse, le vecteur d'état x pouvant être calculé pour chacun des sous-ensembles à partir des valeurs de mesures du sous-ensemble,
   b) et on attribue à chaque valeur de mesure un sous-ensemble de valeurs de mesures ne contenant pas cette valeur de mesure,
   c) et pour chacun des sous-ensembles de valeurs de mesures, à l'aide des valeurs de mesures de ce sous-ensemble, on calcule un vecteur d'état et on l'attribue à la valeur de mesure qui est attribuée au sous-ensemble, **caractérisé**
   d1) en ce qu'une grandeur $Q_k$ pour la qualité d'une k ième valeur de mesure définie pour l'essentiel selon

$$Q_k = \frac{1}{m} \sum_{i=1}^{m} \frac{abs(dx_i - dx_i(k))}{dx_i(k)}$$

   m étant un nombre d'états respectivement des éléments d'un vecteur $dx = (dx_1, dx_2, ... dx_m)$ des écarts d'un état x évalué par rapport à un état nominal $x_0$, le vecteur dx étant déterminé en tenant compte de la k ième valeur de mesure et le vecteur dx(k) étant déterminé sans tenir compte de la k ième valeur de mesure, et
   d2) en ce qu'une valeur de mesure dont la grandeur de qualité $Q_k$ est supérieure à une valeur minimum est diagnostiquée comme défectueuse.

2. Procédé selon la revendication 1, **caractérisé en ce que** dans un état de consigne de la turbine à gaz, le vecteur d'état nominal $x_0$ résulte des valeurs de mesures nominales $y_0$ et on calcule le vecteur d'état x pour chaque sous-ensemble de valeurs de mesures, en déterminant des écarts dy des valeurs de mesures y par rapport aux valeurs de mesures nominales $y_0$, et en déterminant un écart dx du vecteur d'état x par rapport à l'état nominal $x_0$ à partir de ces écarts des valeurs de mesures.

3. Procédé selon la revendication 2, **caractérisé en ce qu'**il existe une fonction y = f(x) pour le calcul des valeurs de mesures y à partir du vecteur d'état x, **en ce que** cette fonction est linéarisée dans l'état nominal $x_0$ et qu'on forme une matrice J de Jacobi, et que la détermination de l'écart dx du vecteur d'état x est effectuée par une multiplication de l'inverse $J^{-1}$ de la matrice de Jacobi J avec les écarts dy des valeurs de mesures y.

4. Procédé selon la revendication 1, **caractérisé en ce qu'**il existe une fonction y = f(x) pour le calcul des valeurs de mesures y à partir du vecteur d'état x et que la détermination du vecteur d'état x à partir des valeurs de mesures y est effectuée de manière itérative par un procédé numérique à l'aide de la fonction y = f (x).

5. Procédé selon la revendication 2, **caractérisé en ce qu'**il existe une fonction y = f(x) pour le calcul des valeurs de mesures y à partir du vecteur d'état x et que la détermination de l'écart dx du vecteur d'état x à partir des écarts dy des valeurs de mesures y est effectuée de manière itérative par un procédé numérique à l'aide de la fonction y = f(x).

6. Procédé selon la revendication 1, **caractérisé en ce qu'**une valeur de mesure dont la grandeur de qualité $Q_k$ devient supérieure à au moins 30% environ, est diagnostiquée comme défectueuse.

7. Procédé selon la revendication 1, **caractérisé en ce que** l'ensemble de valeurs de mesures comporte des valeurs de mesures d'une pression de sortie (PC) et d'une température de sortie (TC) d'un compresseur, d'une pression de sortie (PG) et d'une température de sortie (TG) d'une turbine ainsi qu'au moins une valeur de mesure d'une puissance mécanique, d'un moment mécanique ou d'un débit de combustible de la turbine à gaz.

8. Procédé selon la revendication 1, **caractérisé en ce que** les sous-ensembles des valeurs de mesures sont constitués à partir de l'ensemble de valeurs de mesures y en omettant exactement une valeur de mesure de manière cyclique.

9. Produit de programme informatique avec des moyens de codes de programmes informatiques aptes à exécuter le procédé selon une des revendications 1 à 8 lors de leur exécution sur un ordinateur.

F

2

1

3

N, M

PC, TC

PG, TG

**EP 1 233 165 B1**

**IN DER BESCHREIBUNG AUFGEFÜHRTE DOKUMENTE**

**In der Beschreibung aufgeführte Patentdokumente**

- WO 9964736 A